# EUROPEAN PATENT SPECIFICATION

(11) **EP 2 866 187 B1**
(45) Date of publication and mention of the grant of the patent: **23.08.2017**
(21) Application number: 14188525.1
(22) Date of filing: 10.10.2014
(51) Int. Cl.: G06Q 30/06, H04B 5/00, H04W 4/00

(54) **Method, apparatus, and terminal device for transmitting NFC data**
Verfahren, Vorrichtung und Endgerätevorrichtung zur Übertragung von NFC-Daten
Procédé, appareil et dispositif terminal pour transmettre des données NFC

(30) Priority: 25.10.2013 CN 201310514083
(43) Date of publication of application: 29.04.2015
(73) Proprietor: Xiaomi Inc., Beijing 100085 (CN)
(72) Inventor: Xu, Lina, Haidian District, (CN); Kangshang, Mingxue, Haidian District, (CN); Lin, Junqi, Haidian District (CN)
(74) Representative: Hanna Moore + Curley

(56) References cited:
- WO-A1-2013/109320
- US-A1- 2008 004 985

## Description

### CROSS REFERENCE TO RELATED APPLICATION

The present application claims the priority of Chinese patent application No. 201310514083.1, filed on Oct. 25, 2013.

### TECHNICAL FIELD

The present disclosure relates to the field of short-range wireless communications technology, and more particularly, to a method, an apparatus and a terminal device for NFC data transmission.

### BACKGROUND

Near Field Communication (NFC), or short-range wireless communication, is a short-range high-frequency wireless communication technology, allowing non-contact point-to-point data transmission between electronic devices (within ten centimeters) to exchange data. This technology was developed by contactless radio frequency identification (RFID), which is backward compatible with RFID, and is mainly used in handheld devices such as mobile phones to provide M2M (Machine to Machine) communication. Near Field Communication provide security, and is considered having great application prospects in areas such as mobile payments.

NFC is available not only between two devices having NFC-recognition capabilities, but also between an NFC device and a non-dynamic NFC chip (called an NFC sticker or an NFC tag). An NFC-equipped intelligent mobile phone can read the programs (pre-written by software) in NFC tags to perform tasks automatically.

However, these programs can only allow modification of the mobile phone's settings, sending short messages, starting applications and other functions, and the completed functions are only performed within the terminal.

The present state of the art is represented by US 2008/0004985 A1 relating to the use of RFID tags and WO 2013109320 A1 relating to the use of QR codes.

### SUMMARY

A method, an apparatus and a terminal device for transmitting NFC data is provided in accordance with the claims which follow.

The embodiments of the present disclosure provide a method, an apparatus and a terminal device for transmitting NFC data, to save time spent for a user to obtain third-party services via the mobile terminal, thereby improving the convenience of accessing to third-party services.

According to a first aspect of embodiments of the present disclosure, there is provided a method for transmitting NFC data, including: scanning a previously created NFC tag to obtain tag data, wherein the tag data at least includes an identification code of a third-party service provider and transaction information; generating an order according to the identification code, the transaction information, and user information; and sending the order to the third-party service provider corresponding to the identification code to complete the operation of submission of the order.

The technical solutions provided in embodiments of the present disclosure may achieve the following beneficial effects: because the tag data of the NFC tag contains an identification code of a third-party service provider and the transaction information, the terminal device may determine the third-party service provider according to the identification code, generate the corresponding order, and then send it to the third-party service provider. Therefore, users do not need to use different service software or websites provided by third-party service providers to submit orders, while the terminal device may self-recognize third-party service providers corresponding to the orders, and send the orders to the corresponding third-party service providers. In this way, it is possible to save the time spent for the user to obtain third-party services via the mobile terminal, thereby improving the convenience of accessing to third-party services. In addition, for the third-party service providers, there is no need to develop their own applications or build a website customer service system, saving a lot of service costs and improving service efficiency.

The sending the order to the third-party service provider corresponding to the identification code to complete the operation of submission of the order includes: converting a format of the order into a format supported by a third-party service provider corresponding to the identification code; and sending the order in the converted format to the third-party service provider corresponding to the identification code.

The technical solutions provided in embodiments of the present disclosure may achieve the following beneficial effects: for the users, the orders they see are the same, and a variety of different formats of orders are not required, which can save the time spent for the users to obtain third-party services via the mobile terminals, thereby improving the convenience of accessing to third-party services. In addition, for the third-party service providers, there is no need to identify different types of formats, saving a lot of service costs and improving service efficiency.

Before the operation of scanning the NFC tag, the method further includes: writing the identification code of the third-party service provider and the transaction information into the NFC tag.

The technical solutions provided in embodiments of the present disclosure may achieve the following beneficial effects: because the identification code of the third-party service provider and the transaction information are stored in the NFC tag in advance, when placing orders, the user need not to input those information each time. Simply by scanning NFC tag, the information can be synthesized automatically into the orders, which can greatly save the time spent for the user to obtain third-party services, thereby improving the convenience of accessing to third-party services.

The method further includes: encrypting the user information and writing the encrypted user information into the NFC tag.

The method further includes: decrypting the encrypted user information to obtain the user information.

The technical solutions provided in embodiments of the present disclosure may achieve the following beneficial effects: because the user information in the NFC tag is stored in advance, when placing orders, the user needs not to input those information. Simply by scanning NFC tag, the information can be synthesized automatically into the orders, which can greatly save the time spent for the user to obtain third-party services, thereby improving the convenience of accessing to third-party services.

The method further includes: obtaining the user information locally or from user inputs.

The technical solutions provided in embodiments of the present disclosure may achieve the following beneficial effects: by storing the user information locally or inputting the user information by the user, the security of the user privacy may be improved, which can save the time spent for the user to obtain third-party services, thereby improving the convenience of accessing to third-party services.

The method further includes: obtaining the user information via a sensor.

The technical solutions provided in embodiments of the present disclosure may achieve the following beneficial effects: because the user information is obtained via a sensor, the accuracy and convenience of accessing to the user information may be improved, reducing user inputs, saving the time spent for the user to obtain third-party services, thereby improving the convenience of accessing to third-party services.

The method further includes: receiving, in real time, order status information generated by the third-party service provider in accordance with the processing of the order.

The technical solutions provided in embodiments of the present disclosure may achieve the following beneficial effects: with the real-time access of the order status information by the terminal devices, the users may learn the processing situation of their orders in real time, thereby facilitating the users to query and further improving the convenience of the accessing to third-party services.

The method of the present embodiment further includes: performing statistics on user consumption information according to the order.

The technical solutions provided in embodiments of the present disclosure may achieve the following beneficial effects: the terminal devices may perform statistics on the user consumption information so that the users can be accurately informed of their consumption records, so it is convenient for the users to query the past records of consumption, thereby improving the user experiences.

According to a second aspect of embodiments of the present disclosure, there is provided an apparatus for transmitting NFC data, including: a scanning module configured to scan a previously created NFC tag to obtain tag data, wherein the tag data at least includes an identification code of a third-party service provider and transaction information; An order generating module configured to generate an order according to the identification code, the transaction information and the user information; and a sending module configured to send the order to the third-party service provider corresponding to the identification code to complete the operation of submission of the order.

The apparatus further includes: a format converting module configured to convert a format of the order into a format supported by a third-party service provider corresponding to the identification code; and the sending module being further configured to send the order in the converted format to the third-party service provider corresponding to the identification code.

The apparatus further includes: a writing module configured to write the identification code of the third-party service provider and the transaction information into the NFC tag.

The apparatus further includes: an encrypting module configured to encrypt the user information and the writing module being configured to write the encrypted user information into the NFC tag.

The apparatus further includes: a decrypting module configured to decrypt the encrypted user information to obtain the user information.

The apparatus further includes: a storage module configured to store the user information; and an obtaining module configured to obtain the user information from the storage module.

Alternatively, the apparatus further includes: an input obtaining module configured to obtain the user information from user inputs.

The apparatus further includes: a sensor configured to obtain the user information.

The apparatus further includes: a receiving module configured to receive, in real time, order status information generated by the third-party service provider in accordance with the processing of the order.

The apparatus further includes: a statistics module configured to perform statistics on user consumption information according to the order.

According to a third aspect of embodiments of the present disclosure, there is provided a terminal device, including: a memory, and one or more programs, wherein the one or more programs are stored in the memory and are configured to be executed by one or more processors, the one or more programs including instructions for the performing the following operations: scanning a previously created NFC tag to obtain tag data, wherein the tag data at least includes an identification code of a third-party service provider and transaction information; generating an order according to the identification code, the transaction information, and user information; and sending the order to the third-party service provider corresponding to the identification code to complete the operation of submission of the order.

According to a third aspect of embodiments of the present disclosure, there is provided a program product with stored instructions that, when executed by one or more processors of the terminal device as above, causes the terminal device to perform:
scanning a previously created NFC tag to obtain tag data, wherein the tag data at least comprises an identification code of a third-party service provider and transaction information;
generating an order according to the identification code, the transaction information, and user information; and
sending the order to the third-party service provider corresponding to the identification code to complete the operation of submission of the order.

The technical solutions of the present disclosure will be described hereafter in detail with reference to the embodiments and drawings.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.

The accompanying drawings serve to provide further understanding of the present disclosure, and constitute a part of this specification, and illustrate the present disclosure together with the embodiments of the present disclosure.
Fig. 1 is an illustrative flow chart showing a method for transmitting NFC data applied to a terminal device according to an exemplary embodiment.
Fig. 2 is an illustrative view showing an order on an interface of a terminal device according to an exemplary embodiment.
Fig. 3 is a block diagram illustrating an apparatus for transmitting NFC data according to an exemplary embodiment.
Fig. 4 is a block diagram illustrating a terminal device according to an exemplary embodiment.

### DESCRIPTION OF THE EMBODIMENTS

To make the objects, technical solutions and advantages of the present disclosure more apparent, the present disclosure will be described hereafter in detail with reference to the embodiments and drawings.

By redefining the NFC tag data format, the terminal device can identify the data which is a service request and then transmit directly the service order to a third-party service provider.

The present disclosure provides a method, an apparatus and a terminal device for transmitting NFC data which will be given a detailed description with reference to the accompany drawings.

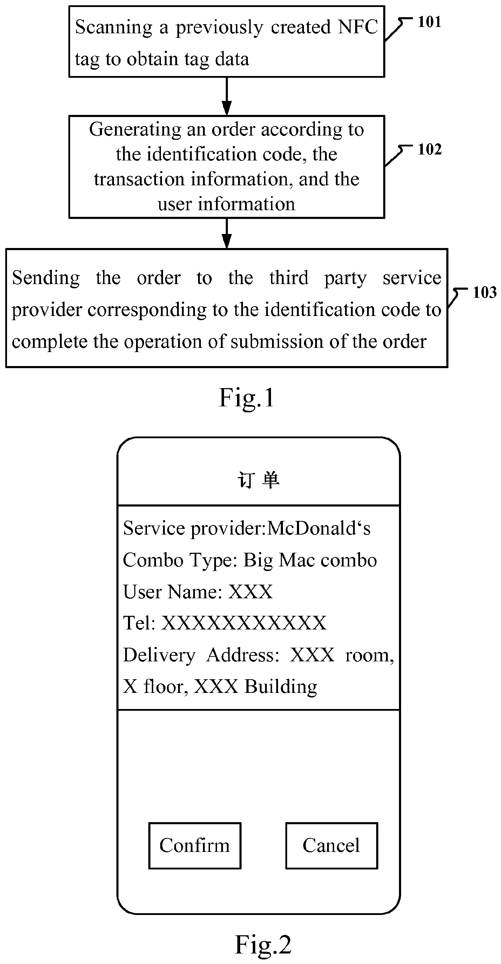

In a certain embodiment, as shown in Fig. 1, there is provided a method for transmitting NFC data applied to a terminal device, including the following steps.

In step 101, a previously created NFC tag is scanned to obtain tag data, wherein the tag data at least includes an identification code of a third-party service provider and transaction information.

In step 102, an order according to the identification code, the transaction information, and user information is generated.

In step 103, the order to the third-party service provider corresponding to the identification code is sent to complete the operation of submission of the order.

In this embodiment, the transaction information is the content of services ordered by the user, for example: in case of an NFC tag for ordering McDonald's takeaway, the transaction information may be the ordered combo type; in case of an NFC tag for paying phone bill, the transaction information may be the limit amount of the phone bill.

In this embodiment, because the tag data of the NFC tag contains an identification code of a third-party service provider and the transaction information, the terminal device may determine the third-party service provider according to the identification code, generate the corresponding order, and then send it to the third-party service provider. Therefore, users do not need to use different service software or websites provided by third-party service providers to submit orders, while the terminal device may self-recognize third-party service providers corresponding to the orders, and send the orders to the corresponding third-party service providers. In this way, it is possible to save the time spent for a user to obtain third-party services via the mobile terminal, thereby improving the convenience of accessing to third-party services. In addition, for third-party service providers, there is no need to develop their own applications or build a website customer service system, saving a lot of service costs and improving service efficiency.

In this embodiment, step 103 includes: converting a format of the order into a format supported by a third-party service provider corresponding to the identification code; and sending the order in the converted format to the third-party service provider corresponding to the identification code.

In this embodiment, due to different services provided by various third-party service providers, the third-party service providers support different order formats, for example, McDonald's orders is different from that of taxi or phone bill in order format. Therefore, for the different third-party service providers, the terminal needs to convert its order into a format supported by the corresponding third-party service provider to transmit. For the users, the orders they see are the same, and a variety of different formats of orders are not required, which can save the time spent for the users to obtain third-party services via the mobile terminals, thereby improving the convenience of accessing to third-party services. In addition, for the third-party service providers, there is no need to identify different types of formats, saving a lot of service costs and improving service efficiency.

In this embodiment, before step 101, the identification code of the third-party service provider and the transaction information may be written into the NFC tag in advance.

In this embodiment, because the identification code of the third-party service provider and the transaction information are stored in the NFC tag in advance, when placing orders, the user need not to input those information, but simply by scanning NFC tag, the information can be synthesized automatically into the orders, which can greatly save the time spent for the user to obtain third-party services, thereby improving the convenience of accessing to third-party services.

In this embodiment, the user information in step 102 may be obtained through the following three ways.

(1) The user information is previously stored in the NFC tag, and is obtained by the terminal device to scan the NFC tag.

The user information stored in the NFC tag needs to be encrypted, and the encrypted user information is written into the NFC tag by the terminal device.

When the tag data includes the encrypted user information, the terminal device may get the tag data by scanning the pre-created NFC tag, and then decrypt the encrypted user information to get the user information.

With the encryption of the user information stored in the NFC tag, only a certain terminal device is able to read the user information in the NFC tag, improving the security of the user privacy.

Furthermore, because the user information in the NFC tag is stored in advance, when placing orders, the user need not to input those information, but simply by scanning NFC tag, the information can be synthesized automatically into the orders, which can greatly save the time spent for the user to obtain third-party services, thereby improving the convenience of accessing to third-party services.

(2) The user information is obtained locally or from user inputs. In this case, there is no need to encrypt the user information.

By storing the user information locally or inputting the user information by the user, the security of the user privacy may be improved, which can save the time spent for the user to obtain third-party services, thereby improving the convenience of accessing to third-party services.

(3) The user information is obtained via a sensor.

For example, if a user wants to take a taxi, his location is positioned is directly via GPS and the positioning result is regarded as the user information. Because the user information is obtained via a sensor, the accuracy and convenience of accessing to the user information may be improved, reducing user inputs, saving the time spent for the user to obtain third-party services, thereby improving the convenience of accessing to third-party services.

Hereafter, the method of the present embodiment will be explained by an example. The user can write an erasable NFC tag with his terminal device the following information in advance.
Third party service provider ID: 000001 (McDonald's)
Transaction Information: Combo Type: Big Mac combo,
User Information:
User Name: XXX,
Tel: XXXXXXXXXXX,
Delivery Address: XXX room, X floor, XXX Building

When the user touches this NFC tag with his/her terminal device, the order as shown in Figure 2 occurs on the interface of the terminal device. After the user confirms the order, the terminal device sends the order to McDonald's, and then McDonald's can receive this order so as to deliver the fast food to the user.

From the above specific example, it can be seen that, the user can place an order very simply, that is, the user just needs to use the terminal device to scan the NFC tag and confirm the order on the user interface, without the need to enter the type of package for reservation and the user information required for ordering, which can save the time spent for the user to obtain third-party services via the mobile terminal, thereby improving the convenience of accessing to third-party services.

The method of this embodiment further includes: receiving, in real time, order status information generated by the third-party service provider in accordance with the processing of the order. With the real-time access of the order status information by the terminal devices, the users may learn the situation of the processing of their orders in real time, thereby facilitating the users to query and further improving the convenience of the accessing to third-party services.

The method of this embodiment further includes: performing statistics on user consumption information according to the order. For example, the times that the user places orders, wherein, the times that the user places orders to McDonald's, the times that the user calls taxi services, etc., and the consumption amount of each service.

In this embodiment, the terminal devices may perform statistics on the user consumption information so that the users can be accurately informed of their consumption records, which is convenient for the users to query the past records of consumption, thereby improving the user experiences.

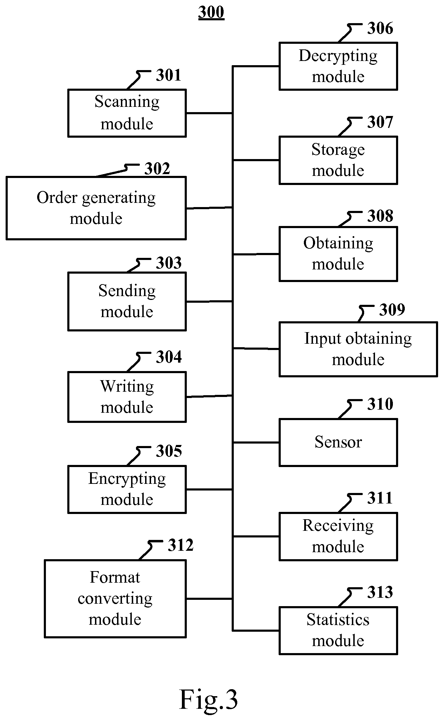

In another embodiment, as shown in Fig. 3, there is provided an apparatus 300 for transmitting NFC data, which includes the following modules.

A scanning module 301 is configured to scan a previously created NFC tag to obtain tag data, wherein the tag data at least includes an identification code of a third-party service provider and transaction information.

An order generating module 302 is configured to generate an order according to the identification code, transaction information and user information.

A sending module 303 is configured to send the order to the third-party service provider corresponding to the identification code to complete the operation of submission of the order.

In this embodiment, the apparatus 300 further includes: a format converting module 312 configured to convert a format of the order into a format supported by a third-party service provider corresponding to the identification code. And the sending module further configured to send the order in the converted format to the third-party service provider corresponding to the identification code.

In this embodiment, the apparatus 300 further includes: a writing module 304 configured to write the identification code of the third-party service provider and the transaction information into the NFC tag.

In this embodiment, the apparatus 300 further includes: an encrypting module 305 and a decrypting module 306. Wherein, the encrypting module 305 is configured to encrypt the user information and the writing module 304 is configured to write the encrypted user information into the NFC tag. The decrypting module 306 is configured to decrypt the encrypted user information to obtain the user information.

In this embodiment, the apparatus 300 further includes: a storage module 307 configured to store the user information; and an obtaining module 308 configured to obtain the user information from the storage module. Alternatively, the apparatus further includes: an input obtaining module 309 configured to obtain the user information from user inputs.

In this embodiment, the apparatus 300 further includes: a sensor 310 configured to obtain the user information.

In this embodiment, the apparatus 300 further includes: a receiving module 311 configured to receive, in real time, order status information generated by the third-party service provider in accordance with the processing of the order.

In this embodiment, the apparatus 300 further includes: a statistics module 313 configured to perform statistics on user consumption information according to the order.

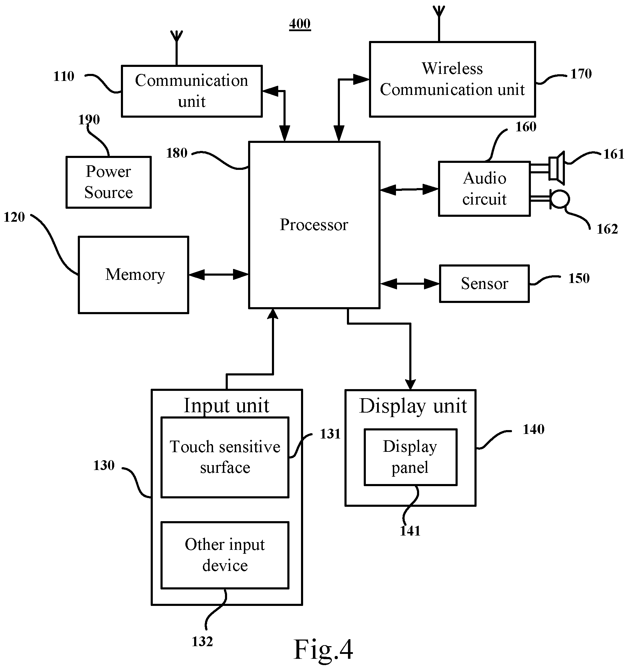

Fig. 4 is a block diagram illustrating the structure of a mobile terminal according to an exemplary embodiment of the present disclosure. Referring to Fig.4, the mobile terminal may be used for implementing the method provided in the above embodiments.

The mobile terminal 400 may include: a communication unit 110, a memory 120 including one or more computer readable storage media, an input unit 130, a display unit 140, a sensor 150, an audio circuit 160, a WIFI (Wireless Fidelity) module 170, a processor 180 including one or more process cores, and a power source 190 and the like.

The communication unit 110 may be configured to send and receive signals during sending and receiving of information or a process of calling. The communication unit 110 may be a network communication device such as a Radio Frequency (RF) circuit, a router, a modem and the like. In particular, if the communication unit 110 is the RF circuit, the communication unit 110 receives downlink information from a base station and then transmits the information to the one or more processors 180 to be processed, and transmits the related uplink data to the base station. Generally, the RF circuit served as the communication unit includes, but is not limited to, an antenna, at least one amplifier, a tuner, one or more oscillators, a Subscriber Identity Module (SIM) card, a transceiver, a coupler, a Low Noise Amplifier (LNA), a duplexer and the like. Additionally, the communication unit 110 may also communicate with a network or other devices via a wireless network. The wireless network may adopt any one of communication standard or protocol including, but not limited to, Global System of Mobile communication (GSM), General Packet Radio Service (GPRS), Code Division Multiple Access (CDMA), Wideband Code Division Multiple Access (WCDMA), Long Term Evolution (LTE), email, Short Messaging Service (SMS) and the like. The memory 120 may be configured to store programs and modules software programs and modules, which allow various types of functional applications and data processes to be performed when executed by the processor 180. The memory 120 may mainly include a program storage area and a data storage area. Wherein the program storage area may store an operating system, applications required by at least one required functions (such as voice play function, image play function and the like). The data storage area may store data (such as video data, phonebook data, and the like) created by the use of the terminal device 400. Besides, the memory 120 may include a high speed random access memory. The memory 120 may also include a nonvolatile memory (NVM), such as at least a magnetic disk storage device, flash memory or other nonvolatile solid-state storage device. Correspondingly, the memory 120 may also include a memory controller to control access of the memory 120 performed by the processor 180 and the input unit 130.

The input unit 130 may be configured to receive input numerical or character information and generate signal inputs through a keypad, a mouse, an operation rod, optical or trackball related to user settings and function control. For example, the input unit 130 may include a touch sensitive surface 131 and other input device 132. The touch sensitive surface 131, or a touch display screen or a track pad, may collect touch operation on or near it by the user (for example the user operations on or near the touch sensitive surface 721 with any kind of suitable objects or attachments such as a finger, a touch pen, and the like), and drive the corresponding connection device according to a preset program. Optionally, the touch sensitive surface 131 may include two parts, i.e., a touch detecting device and a touch controller. Wherein, the touch detecting device may detect the touch orientation of the user, and detect the signal caused by the touch operation, and then transmit the signal to the touch controller. The touch controller may receive the touch information from the touch detecting device and convert it into touch point coordinates and then transmit the coordinates to the processor 180 and can receive the command sent from the processor 760 to execute it. The touch controller also receives and performs instructions from the processor 180. Additionally, the touch sensitive surface 131 may be realized with various types such as resistive, capacitive, infrared, or surface acoustic wave and the like. The input unit 130 may also include other kind of input device 132 besides the input unit 130. Optionally, the other input device 132 may include one or more of a physical keypad, functional buttons (such as volume control button, switch button and the like), a trackball, a mouse, an operating rod and the like.

The display unit 140 may be configured to display various kinds of graphic user interfaces of information input by the user or provided to the user or the terminal device 400. These graphic user interfaces may be made up of graphics, texts, icons, videos and any other combination thereof. The display unit 140 may include a display panel 141, optionally, LCD (Liquid Crystal Display), OLED (Organic Light-Emitting Diode) or the like to assemble the display panel 141. Furthermore, the touch sensitive surface 131 may be configured to cover the display panel 141. When detecting the touch operation performed on or near the touch sensitive surface 131, the touch sensitive surface 131 may transmit signals to the processor 180 to determine the type of the touch event, then the processor 180 may provide a corresponding visual output on the display panel 141 according to the type of the touch event. Although in Fig. 4, the touch sensitive surface 131 and the display panel 141 are realizing the input and output functions as two independent components, they can be integrated together in some embodiment to realize the input and output functions.

The terminal device 400 may also include at least one sensor 150 such as a photo sensor, a motion sensor and other sensors. For example, the photo sensor may include an ambient light sensor and a proximity sensor. The ambient light sensor may adjust brightness of the display panel 141 according to intensity of the ambient light. The proximity sensor may close the display panel 141 and/or the backlight when the terminal device 400 is close to the user's ear. As one type of motion sensor, a gravitational acceleration sensor may detect values of accelerations in various directions (usually along three axes); may detect a value and a direction of the gravitation when resting; and may be used in an application for identifying a mobile phone pose (such as switching between a landscape mode and a vertical mode, corresponding games, pose adjusting with a magnetometer), functions related to vibration (such as a pedometer, knocking) and the like. Other sensors such as a gyroscope, a barometer, a hygrometer, a thermometer, an infrared sensor and the like which may be arranged in the terminal device 400 will not be described in detailed.

The audio circuit 160, a speaker 161, a microphone 162 may provide an audio interface between the user and the terminal device 400. The audio circuit 160 may convert the received audio data into electronic signals and transmit the electronic signals to the speaker 161, and the speaker 161 may convert the electronic signals into voice and output the voice. Additionally, the microphone 162 may convert the collected voice signals into electronic signals; the audio circuit 160 receives the electronic signals and converts them into audio data; and the audio data is transmitted to the processor 180 and then is transmitted to another terminal device via the RF circuit 110 after processed by the processor; or the audio data is transmitted to the memory 120 to be further processed. The audio circuit 160 may also include an earplug jack to allow communication between a peripheral earphone and the terminal device 400.

In order to achieve wireless communication, the mobile terminal may be provided with the wireless communication unit 170 which may be a WIFI module. WIFI is a short-range wireless transmission technology. The terminal device 400 may help the user transmit or receive E-mail, browse web pages and access streaming media and the like through the wireless communication unit 170, which provides the user the wireless broadband internet access. Although the wireless communication unit 170 is shown in the Fig. 4, it should be understood that the wireless communication unit 170 is not a necessary component of the terminal device 400, and may be omitted according to requirements within the scope without changing the substance of the present disclosure.

The processor 180 is a control center of the terminal device 400 using various interfaces and wires to connect respective portions of the whole client computer. By running or executing software programs and/or modules stored in the memory 120, calling data stored in the memory 120, and executing various functions of the terminal device 400 and processing data, the processor 180 proceeds overall monitoring to the mobile terminal. Optionally, the processor 180 may include one or more processing cores. Optionally, the processor 180 may integrate application processors and modem processors, wherein the application processors may mainly process the operation systems, the user interfaces, the application programs and the like, and the modem processors may mainly process wireless communications. It should be understood that the above modem may not be integrated into the processor 180.

The terminal device 400 may also include the power supply 190 (for example, a battery) to supply power to respective component. For example, the power supply may be logically connected with the processor 180 through a power supply management system, thereby realizing functions of managing charging, discharging, power consumption, and the like through the power supply management system. The power supply 190 may further include arbitrary components such as one or more DC or AC power supplies, a rechargeable system, a power supply malfunction detection circuit, a power supply converter or an inverter, a power supply state indicator and the like. Although not shown, the terminal device 400 may also include a camera, a Bluetooth module, which will not described in detail.

In this embodiment, the display unit of the terminal device is a touch screen display, and the terminal device may also include a memory, and one or more programs stored in the memory, wherein the one or more programs are configured to be executed by one or more processors, and include instructions of performing the following operations: scanning a previously created NFC tag to obtain tag data, wherein the tag data at least includes an identification code of a third-party service provider and transaction information; generating an order according to the identification code, the transaction information, and user information; and sending the order to the third-party service provider corresponding to the identification code to complete the operation of submission of the order.

The program may further include instructions of performing the following operations: converting a format of the order into a format supported by a third-party service provider corresponding to the identification code; and sending the order in the converted format to the third-party service provider corresponding to the identification code.

The program may further include instructions of performing the following operation: writing the identification code of the third-party service provider and the transaction information into the NFC tag.

The program may further include instructions of performing the following operation: encrypting the user information and writing the encrypted user information into the NFC tag.

The program may further include instructions of performing the following operation: decrypting the encrypted user information to obtain the user information.

The program may further include instructions of performing the following operation: obtaining the user information locally or from user inputs.

The program may further include instructions of performing the following operation: obtaining the user information via a sensor.

The program may further include instructions of performing the following operation: receiving, in real time, order status information generated by the third-party service provider in accordance with the processing of the order.

The program may further include instructions of performing the following operation: performing statistics on user consumption information according to the order.

In addition, typically the mobile terminal described in the present disclosure may be various handheld terminal devices, such as mobile phone, personal digital assistant (PDA), etc.

In addition, the method according to the present disclosure may further be implemented by a CPU executable computer program. When the computer program is executed by the CPU, the above functions defined in the method of the present disclosure are executed.

In addition, the above steps in the method and the units in the system may be implemented by a controller and a computer readable storage device configured to store the computer programs for the controller to achieve the functions of the above steps or units.

In addition, it should be understood that, the computer readable storage device (for example, a memory) described by the present disclosure may be a volatile memory or a nonvolatile memory, or may include both of the volatile memory and the nonvolatile memory. As an example, the nonvolatile memory may include a read-only memory (ROM), a programmable ROM (PROM), an electrically programmable read-only memory ROM (EPROM), an electrically erasable programmable ROM (EEPROM) or a flash memory. The volatile memory may include a random access memory (RAM), which may function as an external cache memory. As an example, the RAM may be obtained in various kinds such as a synchronous RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM) and a directly Rambus RAM (DRRAM).

It should be understood by those skilled in the art that, the various exemplary logic blocks, modules, circuits and algorithm steps described in conjunction with the disclosure herein may be implemented by electronic hardware, computer software or the combination of both. In order to clearly explain the interchangeability of the hardware and the software, it has been generally illustrated with respect to the functions of the various exemplary members, blocks, modules, circuits and steps. Whether such functions are implemented by software or hardware depends on the specific application and the design restriction applied to the whole system.

By using the following components designed to execute the functions described herein, the various exemplary logic blocks, modules and circuits described in conjunction with the disclosure herein may carry out or execute: a general-purpose processor, a digital signal processor (DSP), a specific integrated circuit (ASIC), a field programmable gate array (FPGA) or other programmable logic devices, a discrete gate or transistor logic, a discrete hardware assemble or any combination of those components. The general-purpose processor may be a microprocessor. However, alternatively, the processor may be any of traditional processors, controllers, microcontrollers or state machines. The processor may also be implemented by a combination of the computing devices such as a combination of a DSP and a microprocessor, a plurality of microprocessors, one or more microprocessors in conjunction with DSP core, or any other those kind of configurations.

In an exemplary embodiment, there is provided a program product having stored therein instructions that, when executed by one or more processors of the terminal device as above, causes the terminal device to perform:

scanning a previously created NFC tag to obtain tag data, wherein the tag data at least comprises an identification code of a third-party service provider and transaction information;

generating an order according to the identification code, the transaction information, and user information; and

sending the order to the third-party service provider corresponding to the identification code to complete the operation of submission of the order.

The method or algorithm steps described in conjunction with the disclosure herein may be directly included in the hardware, in the software modules executed by the processor or in the combination of both. The software modules may host in a RAM memory, a flash memory, a ROM memory, an EPROM memory, an EEPROM memory, a register, a hard disk, a movable disc, a CD-ROM, or any of other kind of storage medium known in the art. The exemplary storage media are coupled to the processor, so that the processor can read/write information from/to the storage media. In an alternative aspect, the storage media may be integrated with the processor. The processor and the storage media may host in an ASIC. The ASIC may host in a user terminal. In an alternative aspect, the processor and the storage media may host in a user terminal as a discrete assembly.

In one or more exemplary designs, the function may be implemented in hardware, software, firmware or any combinations thereof. If it is implemented in software, the function may be stored in the computer readable media or transferred via the computer readable media as one or more instructions or codes. The computer readable media may include a computer storage media and a communication media, wherein the communication media may include any medium which is helpful for transferring the computer program from one site to another site. The storage media may be any usable medium accessible by a general or dedicated computer. As an example, the computer readable media may include RAM, ROM, EEPROM, CD-ROM or other CD storage devices, disk storage devices or other magnetic storage devices, or may be any other media for carrying or storing the required program code in form of instructions or data structure accessible by a general or dedicated computer or a general or dedicated processor. In addition, any kind of connection may be properly referred as a computer readable medium. For example, if software is sent from a website, a server or other distant sources with a coaxial cable, an optical fiber cable, a twisted-pair, or a digital user line (DSL), or with the wireless technology such as infrared, radio wave or microwave, those above coaxial cable, optical fiber cable, twisted-pair, DSL or the wireless technology such as infrared, radio wave and microwave are all included in the definition of media. As used herein, the magnetic disk and optical disk may include a compact disk (CD), a laser disk, an optical disk, a digital versatile disk (DVD), a floppy disk or a blue-ray disk, wherein the magnetic disk usually represents data magnetically, and the optical disk usually represents data optically by using a laser. The combination of the above components may also be included in the scope of the computer readable media.

According to the functions of the method claims in the disclosed embodiments described herein, steps and/or actions are not executed in any specific sequence. In addition, although the element in the present disclosure may be described or required individually, it may be conceived as plural, unless being clearly defined as single.

The objects, technical solutions, and advantageous effects have been given with reference to the above embodiments.

## Claims

1. A method for a user terminal device to transmit near field communication (NFC) data, the method comprising:
scanning a previously created NFC tag to obtain tag data (101), wherein the tag data at least comprises an identification code of a third-party service provider and transaction information;
generating an automatically completed transaction order according to the identification code, the transaction information, and user information (102); and
sending the order to the third-party service provider corresponding to the identification code to complete the operation of submission of the order (103),
**characterized in that** the method further comprises:
encrypting the user information and writing the encrypted user information into the NFC tag by the user's terminal device, in advance of generating an order;
writing the identification code of the third-party service provider, and the transaction information, into the NFC tag, in advance of generating an order; and
displaying the automatically completed transaction order on the user's terminal device for confirmation, when the user touches the NFC tag with the terminal device, prior to sending the order to the third-party service provider.

2. The method of claim 1, wherein the sending the order to the third-party service provider corresponding to the identification code to complete the operation of submission of the order (103) comprises:
converting a format of the order into a format supported by a third-party service provider corresponding to the identification code; and
sending the order in the converted format to the third-party service provider corresponding to the identification code.

3. The method of claim 1, wherein the method further comprises:
decrypting the encrypted user information to obtain the user information.

4. The method of claim 1, wherein the method further comprises:
obtaining user information locally, or from user inputs, or obtaining user information via a sensor (310).

5. The method of claim 1, wherein the method further comprises:
receiving, in real time, order status information generated by the third-party service provider in accordance with the processing of the order.

6. The method of claim 1, wherein the method further comprises:
performing statistics on user consumption information according to an order history.

7. An apparatus for transmitting NFC data, wherein the apparatus comprises:
a scanning module (301) configured to scan a previously created NFC tag to obtain tag data (101), wherein the tag data at least comprises an identification code of a third-party service provider and transaction information;
an order generating module (302) configured to automatically generate a completed transaction order according to the identification code, the transaction information and user information (102);
**characterized in that** the apparatus further comprises;
a writing module (304) configured to write the identification code of the third-party service provider and the transaction information into the NFC tag in advance of generating the order; and
an encrypting module (305) configured to encrypt the user information and to write the encrypted user information into the NFC tag in advance of generating the order;
a display module for displaying the automatically completed transaction order for a user's confirmation, prior to sending the order to the third-party service provider; and
a sending module (303) configured to send the order to the third-party service provider corresponding to the identification code to complete the operation of submission of the order (103).

8. The apparatus of claim 7, wherein the apparatus further comprises:
a format converting module (312) configured to convert a format of the order into a format supported by the third-party service provider corresponding to the identification code; and
the sending module (303) being further configured to send the order in the converted format to the third-party service provider corresponding to the identification code.

9. The apparatus of claim 7, wherein the apparatus further comprises:
a decrypting module (306) configured to decrypt the encrypted user information to obtain the user information.

10. The apparatus of claim 7, wherein the apparatus further comprises:
a storage module (307) configured to store the user information; and
an obtaining module (308) configured to obtain the user information from the storage module;
or the apparatus further comprises:
an input obtaining module (309) configured to obtain the user information from user inputs.

11. The apparatus of claim 7, wherein the apparatus further comprises:
a sensor (310) configured to obtain user information.

12. The apparatus of claim 7, wherein the apparatus further comprises:
a receiving module (311) configured to receive, in real time, order status information generated by the third-party service provider in accordance with the processing of the order.

13. The apparatus of claim 7, wherein the apparatus further comprises:
a statistics module (313) configured to performing statistics on user consumption information according to an order history.

14. A program product having stored therein instructions, which when executed by one or more processors (180) of a user's terminal device (400), causes the terminal device (400) to perform a method as claimed in any of claims 1 to 6.

## Patentansprüche

1. Verfahren für ein Benutzer-Endgerät zum Übertragen von Nahfeldkommunikations(NFC)-Daten, wobei das Verfahren umfasst:
Abtasten eines zuvor erzeugten NFC-Tags, um Tag-Daten (101) zu erhalten, wobei die Tag-Daten zumindest einen Identifikationscode eines Drittanbieters und Transaktionsinformationen umfassen;
Erzeugen einer automatisch ausgefüllten Transaktionsbestellung gemäß dem Identifikationscode, der Transaktionsinformation und der Benutzerinformation (102); und
Senden der Bestellung an den Drittanbieter, der dem Identifikationscode entspricht, um den Vorgang der Einreichung der Bestellung (103) abzuschließen,
**dadurch gekennzeichnet, dass** das Verfahren außerdem umfasst:
Verschlüsseln der Benutzerinformation und Schreiben der verschlüsselten Benutzerinformation in den NFC-Tag durch das Benutzerendgerät vor dem Erstellen einer Bestellung;
Schreiben des Identifikationscodes des Drittanbieters und der Transaktionsinformation in den NFC-Tag vor dem Erstellen einer Bestellung; und
Anzeigen der automatisch ausgefüllten Transaktionsbestellung auf dem Benutzerendgerät zur Bestätigung, wenn der Benutzer den NFC-Tag mit dem Endgerät berührt, vor dem Senden der Bestellung an den Drittanbieter.

2. Verfahren nach Anspruch 1, wobei das Senden der Bestellung an den Drittanbieter, der dem Identifikationscode entspricht, um den Vorgang der Einreichung der Bestellung (103) abzuschließen, umfasst:
Umwandeln eines Formats der Bestellung in ein Format, das von einem Drittanbieter, der dem Identifikationscode entspricht, unterstützt wird; und
Senden der Bestellung im umgewandelten Format an den Drittanbieter, der dem Identifikationscode entspricht.

3. Verfahren nach Anspruch 1, wobei das Verfahren außerdem umfasst:
Entschlüsseln der verschlüsselten Benutzerinformation, um die Benutzerinformation zu erhalten.

4. Verfahren nach Anspruch 1, wobei das Verfahren außerdem umfasst:
Erhalten von Benutzerinformationen lokal oder von Benutzereingaben, oder Erhalten von Benutzerinformationen über einen Sensor (310).

5. Verfahren nach Anspruch 1, wobei das Verfahren außerdem umfasst:
Empfangen von Bestellstatusinformationen in Echtzeit, die durch den Drittanbieter gemäß der Bearbeitung der Bestellung erstellt wurden.

6. Verfahren nach Anspruch 1, wobei das Verfahren außerdem umfasst:
Durchführen von Statistiken über Benutzerverbrauchsinformation gemäß einem Bestellverlauf.

7. Vorrichtung zum Übertragen von NFC-Daten, wobei die Vorrichtung umfasst:
ein Abtastmodul (301), konfiguriert zum Abtasten eines zuvor erstellten NFC-Tags zum Erhalten von Tag-Daten (101), wobei die Tag-Daten zumindest einen Identifikationscode eines Drittanbieters und Transaktionsinformationen enthalten;
ein Bestellungserstellungsmodul (302), konfiguriert zum automatischen Erstellen einer ausgefüllten Transaktionsbestellung gemäß dem Identifikationscode, der Transaktionsinformation und der Benutzerinformation (102);
**dadurch gekennzeichnet, dass** die Vorrichtung außerdem umfasst:
ein Schreibmodul (304), konfiguriert zum Schreiben des Identifikationscodes des Drittanbieters und der Transaktionsinformation in den NFC-Tag vor dem Erstellen der Bestellung; und
ein Verschlüsselungsmodul (305), konfiguriert zum Verschlüsseln der Benutzerinformation und zum Schreiben der verschlüsselten Benutzerinformation in den NFC-Tag vor dem Erstellen der Bestellung;
ein Anzeigemodul zum Anzeigen der automatisch ausgefüllten Transaktionsbestellung für eine Benutzerbestätigung vor dem Senden der Bestellung an den Drittanbieter; und
ein Sendemodul (303), konfiguriert zum Senden der Bestellung an den Drittanbieter, der dem Identifikationscode entspricht, um den Vorgang der Einreichung der Bestellung (103) abzuschließen.

8. Vorrichtung nach Anspruch 7, wobei die Vorrichtung außerdem umfasst:
ein Formatumwandlungsmodul (312), konfiguriert zum Umwandeln eines Formats der Bestellung in ein Format, das vom Drittanbieter, der dem Identifikationscode entspricht, unterstützt wird; und
das Sendemodul (303), außerdem konfiguriert zum Senden der Bestellung in dem umgewandelten Format an den Drittanbieter, der dem Identifikationscode entspricht.

9. Vorrichtung nach Anspruch 7, wobei die Vorrichtung außerdem umfasst:
ein Entschlüsselungsmodul (306), konfiguriert zum Entschlüsseln der verschlüsselten Benutzerinformation, um die Benutzerinformation zu erhalten.

10. Vorrichtung nach Anspruch 7, wobei die Vorrichtung außerdem umfasst:
ein Speichermodul (307), konfiguriert zum Speichern der Benutzerinformation; und
ein Erhaltmodul (308), konfiguriert zum Erhalten der Benutzerinformation vom Speichermodul;
oder die Vorrichtung außerdem umfasst:
ein Eingabeerhaltmodul (309), konfiguriert zum Erhalten der Benutzerinformation von den Benutzereingaben.

11. Vorrichtung nach Anspruch 7, wobei die Vorrichtung außerdem umfasst:
einen Sensor (310), konfiguriert zum Erhalten von Benutzerinformationen.

12. Vorrichtung nach Anspruch 7, wobei die Vorrichtung außerdem umfasst:
ein Empfangsmodul (311), konfiguriert zum Empfangen von Bestellstatusinformationen in Echtzeit, die vom Drittanbieter gemäß der Bearbeitung der Bestellung erstellt wurden.

13. Vorrichtung nach Anspruch 7, wobei die Vorrichtung außerdem umfasst:
ein Statistikmodul (313), konfiguriert zum Durchführen von Statistiken über Benutzerverbrauchsinformationen gemäß einem Bestellverlauf.

14. Programmprodukt, das intern Anweisungen gespeichert hat, die beim Ausführen durch einen oder mehrere Prozessoren (180) eines Benutzerendgeräts (400) das Endgerät (400) veranlassen, ein Verfahren nach Anspruch 1 bis 6 auszuführen.

## Revendications

1. Procédé pour un dispositif terminal d'utilisateur pour transmettre des données de communication en champ proche (NFC), le procédé comprenant :
le balayage d'une étiquette NFC précédemment créée pour obtenir des données d'étiquette (101), dans lequel les données d'étiquette comprennent au moins un code d'identification d'un fournisseur de services tiers et des informations de transaction ;
la génération d'un ordre de transaction exécutée automatiquement en fonction du code d'identification, des informations de transaction et des informations d'utilisateur (102) ; et
l'envoi de l'ordre au fournisseur de services tiers correspondant au code d'identification pour achever l'opération de soumission de l'ordre (103),
**caractérisé en ce que** le procédé comprend en outre :
le cryptage des informations d'utilisateur et l'écriture des informations d'utilisateur cryptées dans l'étiquette NFC par le dispositif terminal de l'utilisateur, à l'avance par rapport à la génération d'un ordre ;
l'écriture du code d'identification du fournisseur de services tiers et des informations de transaction dans l'étiquette NFC, à l'avance par rapport à la génération d'un ordre ; et
l'affichage de l'ordre de transaction exécutée automatiquement sur le dispositif terminal de l'utilisateur pour une confirmation, quand l'utilisateur touche l'étiquette NFC avec le dispositif terminal, avant d'envoyer l'ordre au fournisseur de services tiers.

2. Procédé selon la revendication 1, dans lequel l'envoi de l'ordre au fournisseur de services tiers correspondant au code d'identification pour achever l'opération de soumission de l'ordre (103) comprend :
la conversion d'un format de l'ordre en un format supporté par un fournisseur de services tiers correspondant au code d'identification ; et
l'envoi de l'ordre dans le format converti au fournisseur de services tiers correspondant au code d'identification.

3. Procédé selon la revendication 1, dans lequel le procédé comprend en outre :
le décryptage des informations d'utilisateur cryptées pour obtenir les informations d'utilisateur.

4. Procédé selon la revendication 1, dans lequel le procédé comprend en outre :
l'obtention d'informations d'utilisateur localement, ou à partir d'entrées d'utilisateur, ou l'obtention d'informations d'utilisateur par le biais d'un capteur (310).

5. Procédé selon la revendication 1, dans lequel le procédé comprend en outre :
la réception, en temps réel, d'informations d'état d'ordre générées par le fournisseur de services tiers conformément au traitement de l'ordre.

6. Procédé selon la revendication 1, dans lequel le procédé comprend en outre :
l'exécution de statistiques sur des informations de consommation d'utilisateur en fonction d'un historique d'ordres.

7. Appareil pour transmettre des données NFC, dans lequel l'appareil comprend :
un module de balayage (301) configuré pour balayer une étiquette NFC précédemment créée pour obtenir des données d'étiquette (101), dans lequel les données d'étiquettes comprennent au moins un code d'identification d'un fournisseur de services tiers et des informations de transaction ;
un module de génération d'ordre (302) configuré pour générer automatiquement un ordre de transaction exécutée en fonction du code d'identification, des informations de transaction et des informations d'utilisateur (102) ;
**caractérisé en ce que** l'appareil comprend en outre :
un module d'écriture (304) configuré pour écrire le code d'identification du fournisseur de services tiers et les informations de transaction dans l'étiquette NFC, à l'avance par rapport à la génération d'un ordre ; et
un module de cryptage (305) configuré pour crypter les informations d'utilisateur et pour écrire les informations d'utilisateur cryptées dans l'étiquette NFC à l'avance par rapport à la génération d'un ordre ;
un module d'affichage pour afficher l'ordre de transaction exécutée automatiquement pour une confirmation de l'utilisateur, avant d'envoyer l'ordre au fournisseur de services tiers ; et
un module d'envoi (303) configuré pour envoyer l'ordre au fournisseur de services tiers correspondant au code d'identification pour achever l'opération de soumission de l'ordre (103).

8. Appareil selon la revendication 7, dans lequel l'appareil comprend en outre :
un module de conversion de format (312) configuré pour convertir un format de l'ordre en un format supporté par un fournisseur de services tiers correspondant au code d'identification ; et
le module d'envoi (303) étant configuré en outre pour envoyer l'ordre dans le format converti au fournisseur de services tiers correspondant au code d'identification.

9. Appareil selon la revendication 7, dans lequel l'appareil comprend en outre :
un module de décryptage (306) configuré pour décrypter les informations d'utilisateur cryptées pour obtenir les informations d'utilisateur.

10. Appareil selon la revendication 7, dans lequel l'appareil comprend en outre :
un module de stockage (307) configuré pour stocker les informations d'utilisateur ; et
un module d'obtention (308) configuré pour obtenir les informations d'utilisateur à partir du module de stockage ;
ou l'appareil comprend en outre :
un module d'obtention d'entrées (309) configuré pour obtenir les informations d'utilisateur à partir d'entrées d'utilisateur.

11. Appareil selon la revendication 7, dans lequel l'appareil comprend en outre :
un capteur (310) configuré pour obtenir des informations d'utilisateur.

12. Appareil selon la revendication 7, dans lequel l'appareil comprend en outre :
un module de réception (311) configuré pour recevoir, en temps réel, des informations d'état d'ordre générées par le fournisseur de services tiers conformément au traitement de l'ordre.

13. Appareil selon la revendication 7, dans lequel l'appareil comprend en outre :
un module de statistiques (313) configuré pour effectuer des statistiques sur des informations de consommation d'utilisateur en fonction d'un historique d'ordres.

14. Produit de programme ayant des instructions stockées à l'intérieur qui, quand elles sont exécutées par un ou plusieurs processeurs (180) d'un dispositif terminal d'utilisateur (400), amène le dispositif terminal (400) à effectuer un procédé selon l'une quelconque des revendications 1 à 6.
